# EUROPEAN PATENT SPECIFICATION

(11) **EP 0 621 831 B1**
(45) Date of publication and mention of the grant of the patent: **26.03.1997**
(21) Application number: 93902624.1
(22) Date of filing: 20.01.1993
(51) Int. Cl.: B60G 17/052

(54) **LEVEL CONTROL DEVICE FOR AIR-SUSPENDED TRUCKS**
HÖHEREGELUNGSVORRICHTUNG FÜR LASTKRAFTWAGEN MIT LUFTFEDERUNG
DISPOSITIF DE CONTROLE DE NIVEAU POUR CAMIONS EQUIPES DE SUSPENSION PNEUMATIQUE

(30) Priority: 22.01.1992 SE 9200174
(43) Date of publication of application: 02.11.1994
(73) Proprietor: AB VOLVO, 405 08 Göteborg (SE)
(72) Inventor: DOMINIQUE, Christer, S-423 53 Torslanda (SE)
(74) Representative: Ferkinghoff, Claes-Göran
(86) International application number: SE9300025
(87) International publication number: WO9314949

(56) References cited:
- DE-A- 1 680 153
- FR-A- 1 266 548
- FR-A- 2 623 142

## Description

The subject invention concerns a device in air-suspended trucks to adjust the level of the truck loading plane above the vehicle wheel axles. The device consists of a valve which is fixedly secured to the loading plane and is in communication with a pair of lifting bellows incorporated in the air-suspension means, said valves also being mechanically connected to one of the wheel axles by way of an articulated arm. The articulated arm is adapted to sense a change of level of the loading plane in relation to the wheel axle and in response to such changes to open the valve to bring the latter to supply air to the lifting bellows or to vent air therefrom in order to adjust the loading plane level.

A device of this nature is already known for instance from the French Utility Model No. 2,650,552. The device described therein provides automatic level adjustment of the loading plane above the wheel axles. In case the loading plane is heavily loaded with the result that the loading plane sinks somewhat towards the wheel axles, a relative movement valve/articulated arm will occur and the valve will open and in turn supply pressurized air to the lifting bellows, in consequence of which the loading plane will again rise to the original level, and when this level is reached the articulated arm shuts off the valve.

This prior-art system usually also comprises an operating means which is coupled to the device in order to allow manual adjustment of the loading plane level. The operating means used by the vehicle driver is an electric box with control buttons, and the box is connected to magnetic valves. With the aid of the valve the operator can control the flow of pressurized medium in order to manually adjust the level of the loading plane while at the same time the valve providing the automatic function is shunted, thus preventing the latter from counter-acting the intended movement of the loading plane.

This prior-art system suffers from several drawbacks. The system has a comparatively complicated structure, in addition to which it is sensitive to failure, electrical ones such as contact failures, and mechanical ones, such a valve failures. Furthermore, magnetic valves require extensive additional wiring. In case of malfunctioning while on the road the driver has but limited chances to repair the fault on account of the complexity of the system. Also, the large number of components required for the manual operation of the loading plane level makes the system expensive.

The subject invention provides a device designed to manually adjust the level of a vehicle loading plane, which device is extremely simple and uncomplicated. The device is characterized in that the device comprises a pivotal arm (10), the centre portion of which is connected to said valve (8) such that a change in the angular position of said pivotal arm with respect to the loading plane controls the opening/closing mechanism of the valve, one side of said pivotal arm (10) being pivotally connected to said articulated arm (9) while its opposite side is connected to the control member (14) of a manually operated control mechanism (11), by means of which the pivotal arm (10) may be rotated from one end position in which the valve (8) is in a maximum open condition for supply of air to the lifting bellows (4, 5), via a intermediate position in which the valve (8) is closed, to an opposite end position, in which the valve (8) is in a maximum open condition for venting of air from the lifting bellows (4, 5) and vice versa. The device comprises a regulator by means of which it becomes possible to directly actuate the automatic level control of the valve, thus obviating the need for all that extra equipment for the manual level control to which reference is made in the aforegoing.

The invention will be described in closer detail in the following with reference to the accompanying drawings, wherein
Fig. 1 is a perspective view of a part of the frame and one wheel axle of a truck equipped with the level control device in accordance with the invention,
Fig. 2 illustrates the device on an enlarged scale in a lateral view,
Fig. 3 illustrates the device mounted on the vehicle frame in some operative positions, and
Fig. 4 illustrates the device in some operative positions deviating from those shown in Figs. 2 and 3.

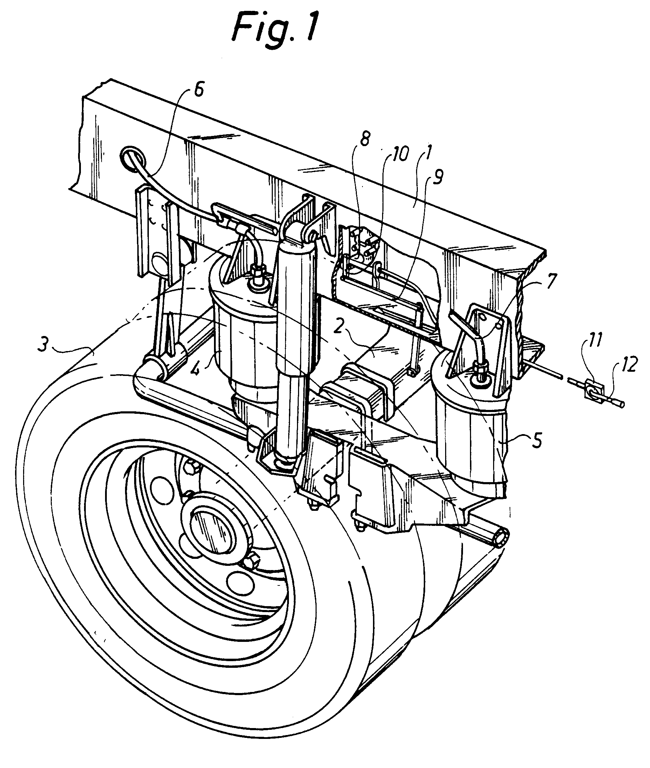

Fig. 1 shows a part of the frame 1 of a truck, on which frame a loading platform, not shown, is intended to be supported. Across the frame 1 and underneath the latter extends a wheel axle 2 on which a wheel 3 is mounted. Interiorly of the latter, on either side of the wheel axle 2, lifting bellows 4, 5 are provided, said bellows being securely attached to the frame 1 and by means of lines 6 and 7, respectively, they are connected to a pressure tank, not shown. A valve 8 which is securely attached to the frame 1 is connected to these lines 6, 7. An articulated arm 9 which is hingedly connected to the wheel axle 2 is coupled to the valve 8 for the purpose of automatically controlling the level of the truck loading plane. In case the distance between the frame 1 and the wheel axle 2 is rediced, for instance as a consequence of a heavy load being applied to the vehicle loading platform, the articulated arm 9 changes its angular position and in doing so it brings the valve 8 to open. The valve consequently opens the communication between the pressure tank and the lifting bellows 4, 5, the latter thus being supplied with pressurized air and lifting the loading plane to a higher level. The articulated arm 9 then again changes its angular position and upon attainment of the intended level of the loading plane, the articulated arm 9 again closes the valve 8. In this manner an automatic adjustment of the loading plane level is effected.

In accordance with the invention the device comprises a pivotal arm 10 which is arranged to control the operning/closing mechanism of the valve 8. Instead of being connected directly to this mechanism, the articulated arm 9 is hingedly connected to one end of the pivotal arm 10. At its opposite end, the pivotal arm 10 is connected to a control mechanism 11. The latter consists of a lever 12 which is arranged for pivotal movement about a casing 13. The metal wire of a Bowden control cable 14 extends between the lever 12 and the last-mentioned end of the pivotal arm 10, said control cable 14 being secured to a bracket 15 which is securely anchored to the articulated arm 9. An elastic sleeve 16 encloses the control mechanism wire between the bracket 15 and the pivotable arm 10.

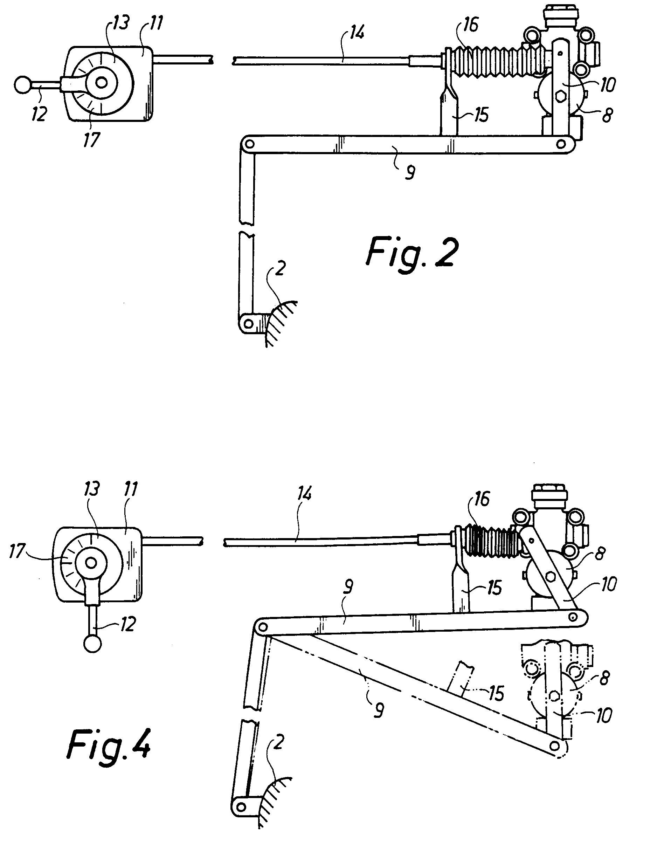

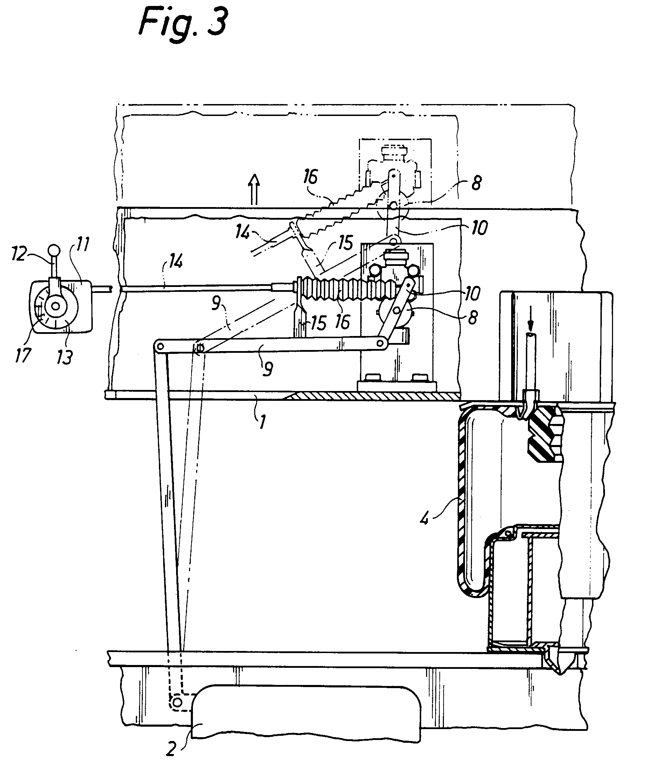

For the purpose of describing the function of the device it is assumed that the position illustrated in Fig. 2 is the neutral position. In this position the pivotal arm is vertical, the lever 12 of the control mechanism 11 is directed horizontally outwards and the valve 8 is closed. When from this position the lever 12 is turned to a vertical position as illustrated in Fig. 3, the pivotal arm 10 will assume an oblique position. As a result, the valve 8 opens and in this position it is assumed to open the communication between the pressure tank and the bellows 4, 5. Pressurized air now flows into the bellows 4 and 5, and they raise the loading plane. The articulated arm 9 senses the change of level and brings the pivotal arm 10 to pivot back in the opposite direction. When the pivotal arm 10 reaches its vertical position as indicated by phantom lines in Fig. 3, the valve 8 again closes and the lifting operation is stopped.

In a corresponding manner, Fig. 4 illustrates lowering of the loading plane. In this case, the lever 12 is moved downwards, for instance to a vertical position, thus forcing the pivotal arm 10 to pivot in the opposite direction to that in accordance with Fig. 3. The valve 8 again opens, but in this case it opens the communication between the lifting bellows 4, 5 and the atmosphere while at the same time the line from the pressure tank is closed. As a result, the loading plane is lowered. The descent is sensed by the articulated arm 9, which effects reverse pivotement of the pivotable arm 10. When the later again reaches its vertical position, the valve 8 again closes and the lowering movement is interrupted.

Raising as well as lowering movements of the loading plane could be interrupted at any time by simply reversing the lever 12 sufficiently for the pivotal arm 10 to assume the vertical position, i.e. corresponding to closing of the valve. Preferably, the casing 13 is provided with a graduation scale 17 to facilitate setting of the lever 12 in positions corresponding to predetermined levels of the loading plane. Preferably, the control mechanism 11 includes a type of stop means to arrest the lever 12 in the neutral position, the purpose being on the one hand to make it easy to find the neutral lever position and on the other to eliminate the risk of inadvertent movement of the control mechanism towards any one of its end positions with resulting actuation of the level control.

In accordance with the invention the control mechanism 11 a sturdy construction which could be securely anchored for instance to the frame 11 without risks for damage. From his seat, the driver of the vehicle may effect the desired level control operations while being able to check the loading plane level perfectly. Such checking possibilities may be necessary, for instance in order to adjust the loading plane level with a loading ramp, or, when the vehicle is equipped with a trailer, to lift or lower the loading plane sufficiently to allow unhooking of the trailer. The control mechanism 11 in fact has such an uncomplicated construction that any malfunctioning that may arise on the road easily may be put right by the driver himself with the aid of conventional tools.

It should also be mentioned that at no time is the automatic mode of operation of the device disconnected but in operation in parallel with the manual adjustment mode.

The invention is not limited to the embodiment illustrated and described but could be varied in a variety of ways within the scope of the appended claims. For instance, in the position of the elastic sleeve 16 may be arranged a piston-and-cylinder unit which via a line is connected to a control valve which serves as the driver's actuating means for the manual level adjustment operations.

## Claims

1. A device in air-suspended trucks to adjust the level of the truck loading plane above the vehicle wheel axles, said device consisting of a valve (8) which is fixedly secured to the loading plane and is in communication with a pair of lifting bellows (4, 5) incorporated in the air-suspension means, said valve also being mechanically connected to one of the wheel axles (2) by way of an articulated arm (9), said arm being adapted to sense a change of level of the loading plane in relation to the wheel axles (2) and, in response to such changes, to open the valve (8) to bring the latter to supply air to the lifting bellows (4, 5) or to vent air therefrom in order to adjust the loading plane level, **characterized** in that the device comprises a pivotal arm (10), the centre portion of which is connected to said valve (8) such that a change in the angular position of said pivotal arm with respect to the loading plane controls the opening/closing mechanism of the valve, one side of said pivotal arm (10) being pivotally connected to said articulated arm (9) while its opposite side is connected to the control member (14) of a manually operated control mechanism (11), by means of which the pivotal arm (10) may be rotated from one end position in which the valve (8) is in a maximum open condition for supply of air to the lifting bellows (4, 5), via a intermediate position in which the valve (8) is closed, to an opposite end position, in which the valve (8) is in a maximum open condition for venting of air from the lifting bellows (4, 5) and vice versa.

## Patentansprüche

1. Vorrichtung in Lastkraftwagen mit Luftfederung zum Verstellen der Höhe der Ladeebene des Lastkraftwagens über den Fahrzeugradachsen, wobei die Vorrichtung aus einem Ventil (8) besteht, das fest an der Ladeebene angebracht ist und mit einem Paar in dem Luftfederungsmittel enthaltenen Hebebälgen (4, 5) in Verbindung steht, wobei das Ventil des weiteren mittels eines Gelenkarms (9) mit einer der Radachsen (2) mechanisch verbunden und der Gelenkarm so ausgeführt ist, daß er eine Niveauänderung der Ladeebene bezüglich der Radachsen (2) erfassen und als Reaktion auf derartige Änderungen das Ventil öffnen (8) kann, damit letzteres zur Verstellung des Niveaus der Ladeebene den Hebebälgen (4, 5) Luft zuführt oder daraus Luft abläßt, dadurch gekennzeichnet, daß die Vorrichtung folgendes umfaßt: einen Schwenkarm (10), dessen mittlerer Teil derart mit dem Ventil (8) verbunden ist, daß eine Änderung der Winkelposition des Schwenkarms bezüglich der Ladeebene den Öffnungs-/Schließmechanismus des Ventils steuert, wobei eine Seite des Schwenkarms (10) schwenkbar mit dem Gelenkarm (9) verbunden ist, während seine gegenüberliegende Seite mit dem Steuerglied (14) eines manuell betätigten Steuermechanismus (11) verbunden ist, mittels dessen der Schwenkarm (10) aus einer Endposition, in der sich das Ventil (8) zur Versorgung der Hebebälge (4, 5) mit Luft in einem maximal geöffneten Zustand befindet, über eine Zwischenposition, in der das Ventil (8) geschlossen ist, in eine gegenüberliegende Endposition, in der sich das Ventil (8) in einem zum Ablassen von Luft aus den Hebebälgen (4, 5) maximal geöffneten Zustand befindet, und umgekehrt gedreht werden kann.

## Revendications

1. Dispositif dans des camions à suspension pneumatique pour régler le niveau du plan de chargement du camion au-dessus des essieux des roues du véhicule, ledit dispositif consistant en une soupape (8) qui est fixée à demeure au plan de chargement et qui se trouve en communication avec une paire de soufflets de levage (4, 5) incorporés dans le moyen de suspension pneumatique, ladite soupape étant également reliée mécaniquement à un des essieux de roues (2) via un bras articulé (9), ledit bras étant conçu pour détecter un changement de niveau du plan de chargement par rapport à l'essieu de roues (2) et, en réponse à de tels changements, pour ouvrir la soupape (8) dans le but d'amener cette dernière à alimenter en air les soufflets de levage (4, 5) ou à laisser échapper de l'air de ces derniers pour régler le niveau du plan de chargement, caractérisé en ce que le dispositif comprend un bras pivotant (10) dont la portion centrale est reliée à ladite soupape (8) de telle sorte qu'un changement dans la position angulaire dudit bras pivotant par rapport au plan de chargement commande le mécanisme d'ouverture/fermeture de la soupape, un côté dudit bras pivotant (10) étant relié en pivotement audit bras articulé (9) tandis que son côté opposé est relié à l'élément de commande (14) d'un mécanisme de commande (11) actionné manuellement, grâce auquel le bras pivotant (10) est à même de tourner à partir d'une position terminale dans laquelle la soupape (8) se trouve dans une condition d'ouverture maximale pour alimenter en air les soufflets de levage (4, 5), en passant par une position intermédiaire dans laquelle la soupape (8) est fermée, jusqu'à une position terminale opposée dans laquelle la soupape (8) se trouve dans une condition d'ouverture maximale pour laisser échapper de l'air des soufflets de levage (4, 5) et vice versa.
